# EUROPEAN PATENT APPLICATION

(11) **EP 4 848 807 A1**
(43) Date of publication of application: **02.12.2026**
(21) Application number: 24919216.2
(22) Date of filing: 22.01.2024
(51) Int. Cl.: H04W 36/00

(54) **COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WU, Hao, Dongguan, Guangdong 523860 (CN); LIN, Xue, Dongguan, Guangdong 523860 (CN)
(74) Representative: Grassi, Stefano
(86) International application number: PCT/CN2024/073532
(87) International publication number: WO 2025/156097

(57) **Abstract**

The present application relates to a communication method, including: a first communication device sends first information, the first information including handover-related first predicted information, and the first predicted information being information predicted on the basis of actual measurement information of the first communication device. According to embodiments of the present application, the handover delay can be reduced by means of handover-related predicted information.

## Description

### TECHNICAL FIELD

The application relates to the field of communication, and more particularly to a communication method and a communication device.

### BACKGROUND

A handover mechanism may be triggered by Layer 3 (L3) measurements and completed via Radio Resource Control (RRC) signaling. L3-based handover requires reconfiguring an RRC or Packet Data Convergence Protocol (PDCP) layer and resetting a Medium Access Control (MAC) and/or physical layer. In Layer 1 or Layer 2-triggered mobility (LTM), a change of a serving cell for a terminal is implemented via L1/L2 signaling while maintaining high-layer configurations unchanged, so as to reduce latency, decrease overhead, and shorten interruption time.

### SUMMARY

The embodiments of the present application provide a communication method and a communication device, which can reduce handover delay.

An embodiment of the present application provides a communication method, including the following operation.

A first communication device sends first information. The first information includes first prediction information related to handover, and the first prediction information is obtained by prediction based on actual measurement information of the first communication device.

An embodiment of the present application provides a communication method, including the following operation

A second communication device receives first information. The first information includes first prediction information related to handover, and the first prediction information is obtained by prediction based on actual measurement information of the first communication device.

An embodiment of the present application provides a first communication device, including a sending unit.

The sending unit is configured to send first information. The first information includes first prediction information related to handover, and the first prediction information is obtained by prediction based on actual measurement information of the first communication device.

An embodiment of the present application provides a second communication device, including a receiving unit.

The receiving unit is configured to receive first information. The first information includes first prediction information related to handover, and the first prediction information is obtained by prediction based on actual measurement information of the first communication device.

An embodiment of the present application provides a communication device, including: a transceiver, a processor, and a memory. The memory is configured to store a computer program, the transceiver is configured to communicate with other devices, and the processor is configured to invoke and execute the computer program stored in the memory to cause the communication device to perform the above communication method.

An embodiment of the present application provides a chip, which is configured to perform the above communication method.

Specifically, the chip includes a processor configured to invoke and execute a computer program from a memory, to cause a device installed with the chip performs the above communication method.

An embodiment of the present application provides a computer-readable storage medium configured to store a computer program, which, when executed by a device, causes the device to perform the above communication method.

An embodiment of the present application provides a computer program product, including computer program instructions that cause a computer to perform the above communication method.

An embodiment of the present application provides a computer program, which, when run on a computer, causes the computer to perform the above communication method.

According to the embodiments of the present application, handover delay can be reduced by using prediction information related to handover.

### BRIEF DESCRIPTION OF THE DRAWINGS

FIG. 1 is a schematic diagram of an application scenario according to embodiments of the present application.
FIG. 2 is a schematic flowchart of LTM signaling.
FIG. 3 is a flowchart of LTM inter-DU handover.
FIG. 4 is a schematic flowchart of a communication method according to an embodiment of the present application.
FIG. 5 is a schematic flowchart of a communication method according to another embodiment of the present application.
FIG. 6 is a schematic flowchart of a communication method according to an embodiment of the present application.
FIG. 7 is a schematic flowchart of a communication method according to another embodiment of the present application.
FIG. 8 is a schematic block diagram of a first communication device according to an embodiment of the present application.
FIG. 9 is a schematic block diagram of a second communication device according to an embodiment of the present application.
FIG. 10 is a schematic block diagram of a communication device according to an embodiment of the present application.
FIG. 11 is a schematic block diagram of a chip according to an embodiment of the present application.
FIG. 12 is a schematic block diagram of a communication system according to an embodiment of the present application.

### DETAILED DESCRIPTION

The technical solutions in the embodiments of the present application will be described below in conjunction with the accompanying drawings in the embodiments of the present application.

The technical scheme of the embodiment of the present application can be applied to various communication systems, such as Long Term Evolution (LTE) systems, Advanced Long Term Evolution (LTE-A) systems, New Radio (NR) systems, evolved systems of NR systems, LTE-based access to unlicensed spectrum (LTE-U) systems, NR-based access to unlicensed spectrum (NR-U) systems, Non-Terrestrial Networks (NTN) systems, Universal Mobile Telecommunication Systems (UMTS), Wireless Local Area Networks (WLAN), Wireless Fidelity (Wi-Fi), 5th-Generation (5G) systems or other communication systems.

Generally speaking, the conventional communication system supports a limited number of connections and is easy to implement. However, with the development of communication technology, the mobile communication system will not only support conventional communication, but also support, for example, Device-to-Device (D2D) communication, Machine-to-Machine (M2M) communication, Machine Type Communication (MTC), Vehicle-to-Vehicle (V2V) communication, or Vehicle-to-everything (V2X) communication, etc.. The embodiments of the present application may also be applied to these communication systems.

In an implementation, the communication system in an embodiment of the present application may be applied to a Carrier Aggregation (CA) scenario, a Dual Connectivity (DC) scenario, and a Standalone (SA) network layout scenario.

In an implementation, the communication system in an embodiment of the present application may be applied to an unlicensed spectrum, and the unlicensed spectrum may also be considered as a shared spectrum. Alternatively, the communication system in an embodiment of the present application may further be applied to a licensed spectrum, and the licensed spectrum may also be considered as a non-shared spectrum.

Embodiments of the present application have described various embodiments in connection with network device and terminal device, where the terminal device may also be referred to as a User Equipment (UE), an access terminal, a subscriber unit, a subscriber station, a mobile site, a mobile station, a remote station, a remote terminal, a mobile device, a user terminal, a terminal, a wireless communication device, a user agent, a user device, or the like.

The terminal device may be a station (ST) in the WLAN, a cellular telephone, a cordless telephone, a Session Initiation Protocol (SIP) telephone, a Wireless Local Loop (WLL) station, a Personal Digital Assistant (PDA) device, a handheld device having Wireless communication capabilities, a computing device or other processing device connected to a wireless modem, an vehicle-mounted device, a wearable device, a terminal device in a next generation communication system (such as an NR Network), or a terminal device in a future evolving Public Land Mobile Network (PLMN) Network, or the like.

In an embodiment of the present application, the terminal device may be deployed on land, including indoor or outdoor, handheld, wearable, or vehicle-mounted. It may also be deployed on the water surface (e.g. ships, etc.). It may also be deployed in the air (e.g. on aircraft, balloons and satellites, etc.).

In the embodiment of the present application, the terminal device may be a mobile phone, a tablet computer, a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, a wireless terminal device in a smart home, or the like.

By way of example and not limitation, in an embodiment of the present application, the terminal device may also be a wearable device. Wearable devices may also be called wearable smart devices, which are a general term for intelligently designing and developing wearable devices, such as glasses, gloves, watches, clothing and shoes, by applying wearable technology to daily wear. A wearable device is a portable device that is worn directly on the body or integrated into a user's clothing or accessories. Wearable devices are not only hardware devices, but also realize powerful functions through software support, data interaction and cloud interaction. Generalized wearable smart devices include full functions, large sizes, complete or partial functions without relying on smart phones, such as smart watches or smart glasses, as well as those that only focus on a certain type of application functions and need to be used in conjunction with other devices such as smart phones, such as various smart bracelets and smart jewelry for physical sign monitoring.

In the embodiment of the present application, the network device may be a device for communicating with a mobile device, and the network device may also be an Access Point (AP) in a WLAN, an evolutionary Node B (eNB or eNodeB) in LTE, a relay station or an access point, a network device (gNB) in a vehicle-mounted device, a wearable device, and an NR network, a network device in a future evolutionary PLMN network, a network device in an NTN network, or the like.

By way of example and not limitation, in the embodiment of the present application, the network device may have mobile characteristics, and for example, the network device may be a mobile device. Optionally, the network device may be a satellite or a balloon station. For example, the satellite may be a low earth Orbit (LEO) satellite, a medium earth Orbit (MEO) satellite, a geostationary earth Orbit (GEO) satellite, a High Elliptical Orbit (HEO) satellite, or the like. Optionally, the network device may also be a base station provided at a location such as land or water.

In the embodiment of the present application, the network device can provide services for the cell, and the terminal device communicates with the network device through transmission resources (e.g., frequency domain resources, or frequency spectrum resources) used by the cell. The cell may be a cell corresponding to the network device (e.g., a base station), and the cell may belong to a macro base station or a base station corresponding to a small cell. The small cells here may include: Metro cells, Micro cells, Pico cells, Femto cells, etc. These small cells have the characteristics of small coverage and low transmission power, and are suitable for providing high-speed data transmission services.

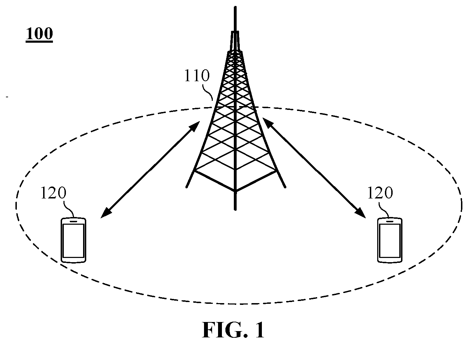

FIG. 1 illustrates exemplarily a communication system 100. The communication system includes a network device 110 and two terminal devices 120. In an implementation, the communication system 100 may include multiple network devices 110, and another number of terminal devices 120 may be included within the coverage range of each network device 110, which is not limited in the embodiment of the present application.

In an implementation, the communication system 100 may further include other network entities such as a Mobility Management Entity (MME), an Access and Mobility Management Function (AMF), and the embodiment of the present application is not limited thereto.

The network device may further include an access network device and a core network device. That is, the wireless communication system further includes multiple core networks for communicating with access network devices. The access network device may be an Evolutionary Node B (eNB or e-NodeB for short), macro base station, a micro base station (also referred to as a "small base station"), a pico base station, an access point (AP), a transmission point (TP), or a new generation node B (gNodeB) in a long-term evolution (LTE) system, a next generation (NR) mobile communication system, or an authorized auxiliary access long-term evolution (LAA-LTE) system.

It should be understood that a device having a communication function in the network/system in the embodiment of the present application may be referred to as a communication device. Taking the communication system illustrated in FIG. 1 as an example, the communication device may include a network device and a terminal device both having a communication function, and the network device and the terminal device may be specific devices in the embodiment of the present application, which will not be described again here. The communication device may also include other devices in the communication system, such as network controllers, mobile management entities and other network entities, which are not limited in the embodiments of the present application.

It is to be understood that the terms "system" and "network" are often used interchangeably herein. The term "and/or" herein is merely an association relationship that describes associated objects, and indicates that there may be three relationships, for example, A and/or B, which may indicate that A exists alone, A and B exists simultaneously, and B exists alone. In addition, the character "/" herein generally indicates that the associated objects before and after the character are in an "or" relationship.

It should be understood that the "indication" mentioned in the embodiments of the present application may be a direct indication, an indirect indication, or an indication that there is an association relationship. By way of example, A indicates B, which may mean that A directly indicates B, e.g., B may be acquired by A. It may also be indicated that A indirectly indicates B, for example, A indicates C, and B may be acquired by C. It can also be indicated that there is an association relationship between A and B.

In the description of the embodiments of the present application, the term "correspondence" may mean that there is a direct correspondence or an indirect correspondence between the two, or may mean that there is a correlation between the two, or may be a relationship between instructing and being instructed, configuring and being configured, or the like.

In order to facilitate understanding of the technical solution of the embodiment of the present application, the related technologies of the embodiment of the present application will be described below, and the following related technologies may be arbitrarily combined with the technical solution of the embodiments of the present application as optional schemes, and all of them belong to the protection scope of the embodiment of the present application.

### I. LTM Process

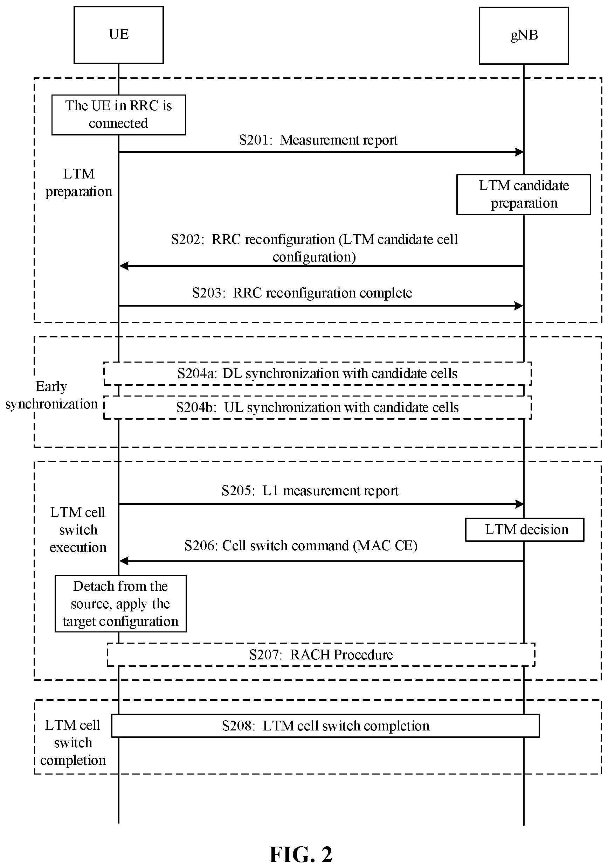

The current handover mechanism is triggered by L3 measurements and accomplished by Radio Resource Control (RRC) signaling. L3-based handover requires reconfiguring the RRC or Packet Data Convergence Protocol (PDCP) layer and resetting the MAC and/or physical layer. In LTM, L1/L2 signaling is used to change the serving cell of the UE while maintaining the high layer configuration unchanged, so as to reduce the delay, reduce the overhead and shorten the interrupt time. The LTM process is illustrated in FIG. 2. During the LTM execution stage, the UE periodically reports the L1 measurement result. The network side makes LTM decision based on the measurement result and issues a cell switch command (cell switch command) in the form of a MAC Control Element (CE), and the UE leaves the serving cell and attempts to access the target LTM cell. In the LTM decision, the UE will keep the LTM candidate cell configuration information after completing the handover, so as to facilitate the subsequent handover.

As illustrated in FIG. 2, an example of an LTM process may include: LTM preparation phase, Early synchronization phase, LTM cell handover execution phase, and LTM cell handover completion stage.

The LTM preparation phase includes the following operations S201-S208.

S201: When the UE in the RRC is connected, the UE sends a measurement report to the gNB. The gNB may perform LTM candidate preparation.

S202: The gNB sends an RRC reconfiguration (LTM candidate cell configuration) message to the UE.

S203: The UE sends an RRC reconfiguration complete message to the gNB.

The early synchronization phase includes the following operations S204s and S204b.

At S204a, DL synchronization with candidate cells.

At S204b, UL synchronization with candidate cells.

The LTM cell handover execution phase includes the following operations S205-S208.

At S205, the UE sends an L1 measurement report to the gNB. The gNB makes LTM decisions.

At S206, the gNB sends a cell switch command (MAC CE) to the UE.

At S207, the UE detaches from the source cell and applies the target configuration. The UE and the gNB perform a RACH Procedure.

The LTM cell handover completion stage includes the following operation.

At S208, LTM cell switch completion.

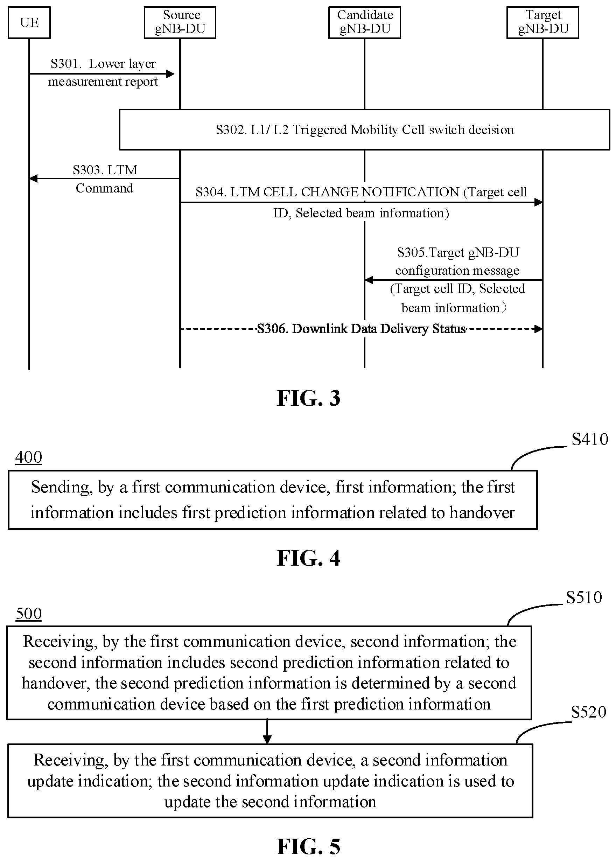

As illustrated in FIG. 3, an example of an LTM inter DU handover process may include the following operations S301-S306.

At S301, the UE sends a lower layer measurement report to the source gNB-DU.

At S302, an L1/L2 triggered mobility cell switch decision is performed between the source gNB-DU, the candidate gNB-DU, and the target gNB-DU.

At S303, the source gNB-DU sends an LTM Command to the UE.

At S304, the source gNB-DU sends an LTM CELL CHANGE NOTIFICATION message (Target cell ID, Selected beam information) to the Target gNB-DU.

At S305, the target gNB-DU sends a target gNB-DU configuration message (Target cell ID, Selected beam information) to the candidate gNB-DU.

At S306, the source gNB-DU sends a Downlink Data Delivery Status to the target gNB-DU.

In LTM, only two scenarios have been discussed: intra-Distributed Unit (intra-DU) LTM and intra-Centralized Unit (intra-CU) inter-DU LTM. To maximize time savings during the handover process, the LTM aims to eliminate the need of random access during the handover, thereby achieving Random Access Channel-less (RACH-less) LTM.

From the perspective of DU, a key factor to realize RACH-less is the transmission of initial uplink (UL) information. That is, the UE needs to send an uplink information to inform the target DU that it has arrived. In order to send this message, the network needs to provide an uplink grant (UL grant) to the UE. This UL grant may be a configured grant (CG) provided before the cell switch or a dynamic grant (DG) provided at the time of the cell switch.

For CG, in the inter-DU scenario, the target DU does not know the specific switching time, and needs to receive UL information on all pre-configured CG resources, which will occupy a lot of resources.

For DG, in the inter-DU scenario, the target DU needs to know when the UE performs cell handover to know when to send UL grant to the UE through the Physical Downlink Control Channel (PDCCH). In the standard, the source DU is required to inform the target DU that the handover is about to occur after sending a cell switch command. This notification process is transmitted through the F1 interface, and the message is forwarded from the source DU to the target DU via the CU, which may cause a transmission delay of about 10ms in some deployment scenarios.

In the case of concentrated deployment of CU and DU, the effect of this delay is acceptable in the inter-DU scenario. However, if LTM technology is further extended to inter-CU scenario, the interface delay may seriously affect the efficiency of LTM.

In addition, the UE needs to perform L1 measurement reporting continuously and periodically. Because the interval between preparation and execution of cell switch of LTM is long, L1 reporting may occupy a large amount of air interface resources.

FIG. 4 is a schematic flowchart of a communication method 400 according to an embodiment of the present application. The method may optionally be applied to the system illustrated in FIG. 1, but is not limited thereto. The method includes at least some of the following operation S410.

At S410, the first communication device sends first information including first prediction information related to handover.

In an embodiment of the present application, the first communication device may send the first information to the second communication device. The first communication device may be a terminal device, and the second communication device may be a network device such as a source DU. The first information may be prediction information related to the handover. For example, the first information may include measurement information predicted from measurement values of the actual measurement information such as a Reference Signal Receiving Power (RSRP) and a Reference Signal Receiving Quality (RSRQ), and may be referred to as measurement prediction information. The measurement prediction information can be obtained by using Artificial Intelligence (AI) algorithm. For another example, the first information may include handover prediction information of a target cell or a candidate cell predicted from the actual measurement information.

In an implementation, the first prediction information may be obtained by prediction based on actual measurement information of the first communication device. For example, after the first communication device (such as the UE) performs measurement and obtains actual measurement information (such as the RSRP), it may predict a predicted RSRP based on the actually measured RSRP. Then, the UE may send a predicted RSRP to a network device, such as a source DU, and the source DU may then determine handover prediction information, such as a target cell or a candidate cell for handover, based on the predicted RSRP. For another example, after the UE performs measurement and obtains actual measurement information such as RSRP, the UE may predict and obtain handover prediction information, such as a target cell or a candidate cell for handover, based on the actually measured RSRP. The UE may then transmit the handover prediction information to the source DU.

In an implementation, the first prediction information includes measurement prediction information, and the measurement prediction information includes prediction information for one or more measurement time points after the current time.

In the embodiment of the present application, the duration between two adjacent measurement time points among multiple measurement time points may be equal to the measurement period of the actual measurement (such as the Layer 1 measurement (L1 measurement)), or may be smaller than the measurement period of the Layer 1 measurement. For example, the first communication device may predict measurement prediction values (such as RSRP and RSRQ) at times t2 and t3 after t1 based on actual measurement values (such as RSRP and RSRQ) at the current time t1.

In an implementation, the measurement prediction information is Layer 1 measurement prediction information, and the duration of two adjacent measurement time points of the multiple measurement time points is less than or equal to the measurement period of the Layer 1 measurement.

In the embodiment of the present application, after the first communication device sends the L1 measurement prediction information to the second communication device, the second communication device may determine, based on the L1 measurement prediction information, a target cell or a candidate cell in which the handover command needs to be executed, and time information at which the handover command starts to be executed, etc.

In an implementation, the first information further includes candidate cell information. In an embodiment of the present application, the candidate cell may also be referred to as a recommended cell. If the first information sent from the first communication device to the second communication device includes target cell information, the second communication device may instruct, based on the target cell information, the target cell to perform the handover command based on the predicted information. If candidate cell information is included in the first information sent from the first communication device to the second communication device, the second communication device may select a target cell from the candidate cells based on the candidate cell information, and instruct the target cell to perform a handover command based on the predicted information.

In an implementation, a target cell may be served by a target distributed unit (DU), and a candidate cell may be served by a candidate DU. The target cell in an embodiment of the present application may be replaced with the target DU, and the candidate cell may be replaced with the candidate DU.

FIG. 5 is a schematic flowchart of a communication method 500 according to another embodiment of the present application. The method may include one or more features of the method described above. In an implementation, the method further includes following operation S510.

At S510, the first communication device receives second information, the second information includes second prediction information related to handover determined by the second communication device based on the first prediction information. In an embodiment of the present application, after the second communication device determines the second information based on the received first information, the second communication device may send the second information to the first communication device. After receiving the second information from the second communication device, the first communication device may perform subsequent handover-related operations based on the second information. For example, if the first prediction information includes measurement prediction information, the second prediction information determined based on the measurement prediction information may include handover prediction information.

In an implementation, the second prediction information includes at least one of the followings:
a cell handover command for instructing the first communication device to perform cell handover; or
a first duration for instructing the first communication device to perform cell handover according to the first duration.

In the embodiment of the present application, the cell handover command may include target cell information such as an identifier of the target DU, or the like. The first communication device may start the cell handover after a first period has elapsed from the time the second prediction information is received. If the second prediction information indicates a start time of the first duration, the first communication device may start cell handover after the first duration has elapsed from the start time following the receipt of the second prediction information. For example, the network device may make an LTM decision based on the measurement prediction information reported by the UE, and issue the second prediction information including the cell handover command and the first duration to the UE in the form of MAC CE. The UE may start to detach from the serving cell and attempt to access the target DU (that is, perform cell handover) after the first time elapses from the time the second prediction information is received. Further, the network device may further send notification information to the target DU to inform the target DU in advance that a UE is about to access it. The target DU may be prepared for handover in advance. For example, the target DU decodes a notification message in advance, configures a UE uplink access resource, selects an access beam, and the like.

In an implementation, the method further includes the following operation S520.

At S520, the first communication device receives a second information update indication for updating the second information.

In the embodiment of the present application, after receiving the second information, the first communication device waits for a period of time, that is, the first duration, before opening the access to the target cell. During this time, if the second communication device finds that the second information needs to be updated, it may send the second information update indication to the first communication device.

In an implementation, the second information update indication includes at least one of the following:
an updated cell handover command for replacing the cell handover command in the second information;
an updated first duration for replacing the first duration in the second information; or
a cell handover cancel command for instructing the first communication device to cancel cell handover.

In the embodiment of the present application, when the first communication device receives the updated cell handover command, it can replace the original cell handover command (for example, the cell handover command in the last received second information). For example, if the identity of the new target cell in the updated cell handover command is different from that in the original cell handover command, the new target cell may be accessed.

In the embodiment of the present application, the first communication device may restart timing after receiving the updated first duration, and open access to the target cell after the updated first duration. The updated first duration may be greater than, less than, or equal to the original first duration (e.g., the first duration in the last received second information).

In the embodiment of the present application, when the first communication device receives the cell handover cancel command, the first communication device may cancel the cell handover, stop the timing of the first duration, and do not attempt to access the target cell.

In an implementation, the first communication device sends the first information, which includes: the first communication device sends the first information under a first condition that is related to handover trigger condition and/or the prediction result of the first communication device.

In the embodiment of the present application, the first communication device may obtain the cell handover command in advance, thereby reducing the air interface transmission delay introduced by the real-time transmission of the cell handover command. Furthermore, the first communication device may apply part of the target configuration in advance, further reducing the delay of accessing the target cell.

In an implementation, the first prediction information in the first information includes at least one of the following:
target cell information for identifying a cell to which the first communication device needs to handover;
candidate cell information for identifying a cell to which the first communication device may handover;
a second duration for informing the second communication device that the first communication device will perform cell handover according to the second duration;
a notification target cell instruction for instructing the second communication device to notify the target cell to perform cell handover preparation; or
a beam indication for informing the second communication device of a beam to be used for transmitting the uplink message and/or a beam recommended for the target cell to adopt.

In the embodiment of the present application, the first prediction information may include handover prediction information predicted by the first communication device based on the actual measurement information. The first communication device may perform prediction based on the actual measurement information to obtain the first prediction information. The first communication device may perform prediction based on the actual measurement information to obtain the measurement prediction information, and then determine the first prediction information based on the measurement prediction information. For example, the UE may employ an AI algorithm to predict, based on the RSRP or RSRQ actually measured at the current time t1, handover prediction information, such as target cell or candidate cell information at t2 or t3 after t1.

In the embodiment of the present application, the target cell information may include an identifier of the target cell, such as an identifier of the target DU. The candidate cell information may include an identifier of a candidate cell, such as an identifier of a candidate DU. One or more of the target cell information, the candidate cell information, the second duration, the notification target cell indication, and the beam indication information may be carried by the same message, or may be carried by different messages, respectively.

For example, if the first prediction information sent from the first communication device to the second communication device includes the target cell information, the second communication device may send notification information to the target cell corresponding to the target cell information to notify the target cell to immediately start sending the dynamic grant through the PDCCH or detecting whether there is uplink data in the pre-configured configuration grant.

For another example, if the first prediction information sent by the first communication device to the second communication device includes the target cell information and the second duration, the second communication device may send notification information to the target cell corresponding to the target cell information to notify the target cell to start sending the dynamic grant through the PDCCH or detecting whether there is uplink data in the pre-configured configuration grant after the second duration expires.

As another example, the first prediction information may include one or more candidate cell information. The multiple candidate cell information may correspond to multiple second durations, and the second durations corresponding to different candidate cell information may be the same or different. If one or more candidate cell information is included in the first prediction information sent from the first communication device to the second communication device, the second communication device may send notification information to candidate cells corresponding to all the candidate cell information to notify all the candidate cells to immediately start sending the dynamic grant through the PDCCH or detecting whether there is uplink data in the pre-configured configuration grant.

For another example, if the first prediction information sent by the first communication device to the second communication device includes one or more candidate cell information and their corresponding second durations, the second communication device may send notification information to all candidate cells corresponding to the candidate cell information to notify all candidate cells to start, after their corresponding second durations expire, sending dynamic grant through the PDCCH or detecting whether there is uplink data in the pre-configured configuration grant.

For another example, if the first prediction information sent by the first communication device to the second communication device includes a notification target cell indication, the second communication device may send any of the above notification information to the target cell corresponding to the target cell information, to notify the target cell to perform cell handover preparation. Otherwise, the notification information may not be sent to the target cell.

As another example, if the first prediction information sent by the first communication device to the second communication device includes beam indication information, the second communication device may acquire, based on the beam indication information, a beam to be used for transmitting an uplink message and/or a transmission/reception beam recommended for adoption by the target cell.

In an implementation, the first condition includes at least one of the following:
the first communication device reaches the handover trigger condition at the current time;
the first communication device reaches the handover trigger condition within a first time window after the current time;
a probability that the first communication device reaches the handover trigger condition in a first time window after the current time is higher than a preset threshold; or
the first communication device needs to update the first information based on the prediction result.

In the embodiment of the present application, the reaching of the handover trigger condition may be replaced by the occurrence of switching. If the first communication device reaches a handover trigger condition or a handover occurs at the current time, the first information may be sent to the second communication device. If the first communication device reaches a handover trigger condition or a handover occurs within a first time window after the current time, the first information may be sent to the second communication device. If the first communication device reaches the handover trigger condition or the probability that the handover occurs is higher than a preset threshold within a first time window after the current time, the first information may be sent to the second communication device.

In the embodiment of the present application, the handover trigger condition may be pre-configured by the network, and is not specifically limited here. For example, layer 3 handover trigger conditions include: A1-A6 events, B1 events, and B2 events. The Layer 1 handover trigger condition of the embodiment of the present application may refer to the layer 3 handover trigger condition, or may include other events.

In the embodiment of the present application, the first communication device may obtain the information of the target cell or the candidate cell by prediction based on the actual measurement information of the first communication device, without frequent measurement reporting, thereby reducing the air interface occupation and the energy consumption of the first communication device. Further, the operations of the second communication device can be reduced, and the handover delay can be shortened. Further, the target cell, such as the target DU, can know the occurrence of the handover in advance, and the second communication device, such as the source DU, can notify other candidate DUs that are not the target DU in advance to release the reserved access resources, thereby reducing the occupation of network resources.

In an implementation, the method further includes the following operations. The first communication device receives configuration information for instructing the first communication device to perform L1 measurement relaxation. In the embodiment of the present application, L1 measurement relaxation may also be understood as L1 measurement report relaxation, and signaling can be reduced by L1 measurement relaxation or L1 measurement report relaxation. The L1 measurement relaxation and the above-mentioned prediction information may be combined, and the L1 measurement prediction values in the future period can be obtained by prediction, so that the number of measurements in the prediction period can be reduced, and the energy consumption of the first communication device can be reduced. This operation may be before the operation of S410, or before S510, or before S520.

In an implementation, the configuration information includes at least one of the following:
target cell information for identifying a cell to which the first communication device needs to handover;
candidate cell information for identifying a cell to which the first communication device may handover;
a second time window for instructing the first communication device to predict L1 measurement prediction values within the second time window after the current time;
a number of prediction time points for instructing the first communication device to predict L1 measurement prediction values based on the number of prediction time points after the current time point; or
a relaxation report indication for instructing the first communication device to perform relaxation measurement reporting.

For example, the configuration information includes target cell information and a second time window, and the first communication device predicts the L1 measurement prediction values of the target cell specified by the target cell information in the second time window. If the configuration information includes multiple groups of corresponding target cell information and the second time window, the second time window values corresponding to each target cell may be the same or different.

For another example, the configuration information includes the target cell information and the number of prediction time points, and the first communication device predicts the L1 measurement prediction values of the target cell designated by the target cell information of the given number of prediction time points after the current time. The first configuration may include multiple groups of corresponding target cell information and the number of prediction time points.

For another example, when the target cell information is defaulted, all configurations may be applied to all candidate cells by default.

For another example, the configuration information includes target cell information, a second time window, and a relaxation reporting indication, and the first communication device predicts the L1 measurement prediction values of the target cell specified by the target cell information in the second time window. The relaxation reporting indication may be represented by one or more bits. For example, 1 indicates that a relaxation reporting is performed, and 0 indicates that no relaxation reporting is performed. If the relaxation reporting indication has a value of 1, the first communication device does not perform the L1 measurement reporting or the L1 measurement prediction value reporting in the second time window after completing the reporting at the current time. If the relaxation reporting indication has a value of 0, the first communication device still performs periodic reporting based on a given measurement period.

For another example, the configuration information includes the target cell information and the second time window, but does not include the relaxation reporting indication. That is, when the relaxation reporting indication is default, the relaxation reporting may not be performed by default.

The target cell information in the above example may be replaced with candidate cell information, and the example will not be repeated here.

In the embodiment of the present application, the first communication device does not need to perform L1 measurement reporting or L1 measurement prediction reporting in the second time window or the predicted time points, thereby reducing air interface transmission signaling without sacrificing access performance.

In an implementation, the method further includes: the first communication device sends its own capability information. The capability information is used to indicate a prediction capability of the first communication device. This operation may be before operation S410, or before S510, or before S520. This operation may also be prior to receiving the configuration information.

In operation, the capability information includes at least one of the following:
whether the first communication device supports a prediction function;
whether the first communication device supports prediction of L1 measurement prediction values;
whether the first communication device supports target cell prediction;
whether the first communication device supports candidate cell prediction;
whether the first communication device supports prediction of a cell group to which a candidate cell belongs;
whether the first communication device supports second duration prediction; or
whether the first communication device supports prediction of notification target cell indication.

In the embodiment of the present application, the target cell prediction may include prediction of the target cell identifier, the candidate cell prediction may include prediction of the candidate cell identifier, and the prediction of the cell group to which the candidate cell belongs may include the prediction of the cell group identifier to which the candidate cell belongs.

In an implementation, the method further includes: the first communication device receives a first indication. The first indication indicates whether the first communication device is allowed to perform the prediction capability reported by the first communication device.

In the embodiment of the present application, before the second communication device issues the configuration information or before the first communication device reports the first information, the first communication device may report the capability first. After receiving the capability information, the second communication device may issue a first instruction to the first communication device. The first indication may feedback whether the first communication device is allowed to perform prediction corresponding to the capability information. The first indications corresponding to different capability information may be different or the same.

For example, the capability information reported by the first communication device to the second communication device includes: supporting prediction function, supporting prediction of L1 measurement prediction values, and supporting target cell prediction. The first indication corresponding to supporting prediction function issued by the second communication device to the first communication device is 1, the first indication corresponding to supporting prediction of L1 measurement prediction values is 0, and the first indication corresponding to supporting target cell prediction is 1. In this case, the first communication device may perform target cell prediction, but cannot perform the prediction of L1 measurement prediction values.

For example, the capability information reported by the first communication device to the second communication device includes supporting candidate cell prediction, supporting prediction of the cell group to which the candidate cell belongs, and supporting second duration prediction. The first indication issued by the second communication device to the first communication device is 1. In this case, the first communication device may perform candidate cell prediction, prediction of the cell group to which the candidate cell belongs, and second duration prediction.

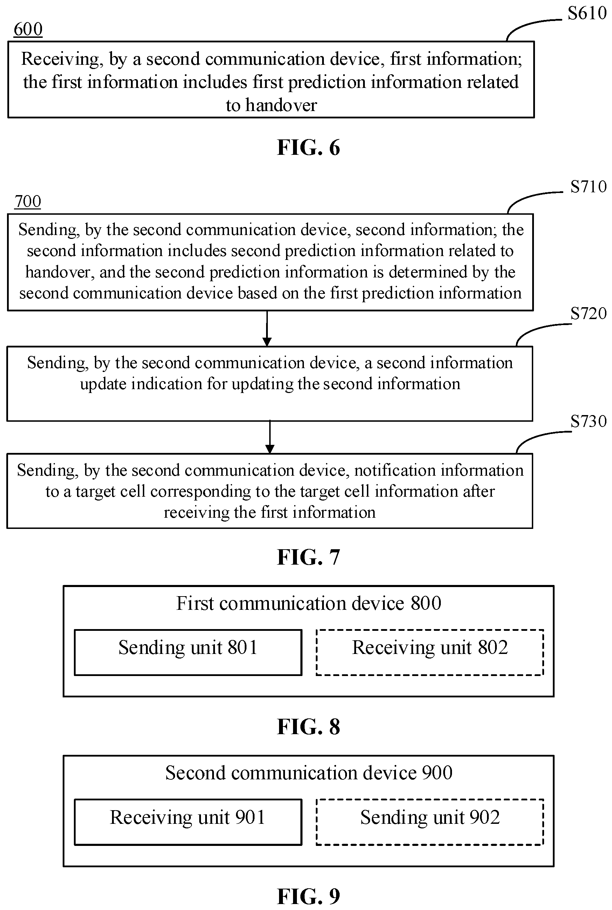

FIG. 6 is a schematic flowchart of a communication method 600 according to an embodiment of the present application. The method may optionally be applied to the system illustrated in FIG. 1, but is not limited thereto. The method includes at least part of the following operation S610.

At S610, the second communication device receives first information including first prediction information related to handover.

In an implementation, the first prediction information may be obtained by prediction based on actual measurement information of the first communication device.

In an implementation, the first prediction information includes measurement prediction information, which includes prediction information for one or more measurement time points after the current time.

In an implementation, the measurement prediction information is Layer 1 measurement prediction information, and the duration of two adjacent measurement time points of multiple measurement time points is less than or equal to the measurement period of the Layer 1 measurement.

In an implementation, the first information further includes candidate cell information.

FIG. 7 is a schematic flowchart of a communication method 700 according to another embodiment of the present application. The method may include one or more features of the method described above. In an implementation, the method further includes the following operation S710.

At S710, the second communication device sends second information including second prediction information related to handover; the second prediction information is determined by the second communication device based on the first prediction information.

In an implementation, the second prediction information includes at least one of the following:
a cell handover command for instructing the first communication device to perform cell handover; or
a first duration for instructing the first communication device to perform cell handover according to the first duration.

In an implementation, the method further includes the following operation S720.

At S720, the second communication device sends a second information update indication for updating the second information.

In an implementation, the second information update indication includes at least one of the following:
an updated cell handover command for replacing the cell handover command in the second information;
an updated first duration for replacing the first duration in the second information; or
a cell handover cancel command for instructing the first communication device to cancel cell handover.

In an implementation, the first prediction information includes at least one of the following:
target cell information for identifying a cell to which the first communication device needs to handover;
candidate cell information for identifying a cell to which the first communication device may handover;
a second duration for informing the second communication device that the first communication device will perform cell handover according to the second duration;
a notification target cell instruction for instructing the second communication device to notify the target cell to perform cell handover preparation; or
a beam indication for informing the second communication device of a beam to be used for transmitting the uplink message and/or a beam recommended for the target cell to adopt.

In an implementation, the method further includes the operation S730.

At S730, the second communication device sends notification information to the target cell corresponding to the target cell information after receiving the first information. The notification information notifies the target cell to start immediately, or start after the second duration expires: sending dynamic grant via the PDCCH or detecting whether there is uplink data in the pre-configured configuration grant; Or

After receiving the first information, the second communication device sends notification information to the candidate cell corresponding to the candidate cell information, and the notification information notifies the candidate cell to start immediately, or start after the second duration expires: sending dynamic grant through the PDCCH or detecting whether there is uplink data in the pre-configured configuration grant.

In an implementation, the method further includes: the second communication device sending configuration information for instructing the first communication device to perform L1 measurement relaxation. This operation may be before operation S610, or before S710, or before S720, or before S730.

In an implementation, the configuration information includes at least one of the following:
target cell information for identifying a cell to which the first communication device needs to handover;
candidate cell information for identifying a cell to which the first communication device may handover;
a second time window for instructing the first communication device to predict L1 measurement prediction values within the second time window after the current time;
a number of prediction time points for instructing the first communication device to predict L1 measurement prediction values based on the number of prediction time points after the current time point; or
a relaxation reporting indication for instructing the first communication device to perform relaxation measurement reporting.

In an implementation, the method further includes: the second communication device receives capability information from the first communication device. The capability information indicates a prediction capability of the first communication device. This operation may be before operation S610, or before S710, or before S720, or before S730. This operation may also be before the operation of sending the configuration information.

In an implementation, the capability information includes at least one of:
whether the first communication device supports a prediction function;
whether the first communication device supports prediction of L1 measurement prediction values;
whether the first communication device supports target cell prediction;
whether the first communication device supports candidate cell prediction;
whether the first communication device supports prediction of a cell group to which a candidate cell belongs;
whether the first communication device supports second duration prediction; or
whether the first communication device supports prediction of notification target cell indication.

In an implementation, the method further includes: the second communication device sends a first indication to indicate whether the first communication device is allowed to perform the prediction capability reported by the first communication device.

The specific examples of the methods 600 and 700 performed by the second communication device of the present embodiment may refer to the related descriptions of the second communication devices in the above-described methods 400 and 500, and will not be described again here for simplicity.

The communication method provided by the embodiments of the present application may include a prediction-based fast non-RACH (RACH-less) LTM method. By predicting at least one of the contents of the L1 measurement values, the target cell, the handover time, etc., of the UE in a future time period, the UE/target DU can be informed of the handover time in advance. In this way, the impact of F1 information transmission delay in inter-DU scenarios can be overcome, thereby reducing the LTM handover delay, decreasing the amount of air interface transmission signaling, and reducing the reserve of candidate cell resources.

### The first Embodiment: A network (such as a source DU) decides an LTM target cell

At S1, after the source DU receives the L1 measurement report, the source DU sends a cell switch command to the UE, and at the same time notifies the target DU through the F1 interface. The target DU will typically know later than the UE that a handover is to occur. If the source DU can obtain the predicted L1 measurement information at the future time, it can inform the target DU in advance, so that the UE and the target DU know that handover is to be performed at almost the same time or, the time difference in knowing the handover is reduced.

With reference to FIG. 2, in the LI measurement report process of operation 5, the UE sends the first information to the source DU. The first information is an L1 measurement (hereinafter referred to as an L1 measurement prediction value) of a future period predicted by the UE based on the actually measured L1 measurement. Optionally, the source DU may determine the target DU based on the L1 measurement prediction value and then send the second information to the UE.

For example, the L1 measurement prediction value includes a prediction value at one or more measurement time points after the current time. The duration between two adjacent measurement time points among the multiple measurement time points may be equal to the measurement period of the L1 measurement, or may be smaller than the measurement period of the L1 measurement. If the duration is less than the L1 measurement, the network can more quickly determine whether it is necessary to notify the target DU of the upcoming handover in advance.

In the present embodiment, the impact on the protocol is relatively small, and such time-series L1 measurement prediction can be realized with high accuracy based on AI technology.

At S2, the UE receives the second information from the source DU. The second information may include a cell handover command and a first duration.

For example, the first duration may instruct the UE to access to the target DU after the first duration expires (for example, the UE may send UL information or detect PDCCH to the target DU).

With reference to FIG. 2, in operation 6, the UE can acquire the cell handover command in advance, thereby reducing the air interface transmission delay introduced by the real-time transmission of the cell handover command. At the same time, the UE can apply part of the target configuration in advance, which further reduces the delay of accessing the target DU.

Optionally, the second information is updated.

Considering that the network actually makes the LTM decision based on the prediction result reported by the UE, and the time at which the UE executes this command is not instantaneous. Then, before the UE executes the cell handover command, the network may also change the target cell or cancel the LTM flow based on the latest actually measured result/the latest predicted result.

The source DU sends a second information modification indication to the UE. The second information modification indication includes one or more of the following:
an updated cell handover command;
an updated first duration; or
a handover cancel command.

Exemplarily, the second information modification indication includes an updated cell handover command and a first duration, and the second information modification indication replaces the original second information. In particular, if the updated first duration is 0, the updated cell handover command is executed immediately.

Exemplarily, the second information modification indication includes a handover cancel command, and the UE continues to remain in the current cell and no longer performs LTM execution.

Exemplarily, the second information modification indication includes an updated first duration, and the UE replaces the original first duration, and performs handover after the updated first duration expires.

As another implementation, the first information may include an L1 measurement report of the UE and a recommended target cell, and this information may help the network side to make better decisions about the LTM target cell.

### The second Embodiment: UE Decision LTM Target Cell

Design idea: In current standards, UE needs to periodically report L1 measurement reports. After receiving an L1 measurement report, the source DU sends a cell handover command to the UE, and simultaneously notifies the target DU through the F1 interface. The target DU learns about the upcoming handover later than the UE. If the UE can, based on the detected L1 measurement result, independently predict when it will handover to which target DU, the UE can notify the corresponding target DU in advance through the source DU. In addition, to reduce the delay impact of beam pairing between the UE and the target DU (especially in high-frequency scenarios), the UE may also predict the beam configuration in advance and inform the target DU through the F1 interface, and the target DU may configure resources (for example, CG resources) accordingly.

When the first condition is satisfied, the UE sends the third information to the source DU. The third information may be an example of the first information in the embodiments of the above-described methods 400 to 700, and is named as the third information in order to be distinguished from the first information in the first embodiment.

Exemplarily, the third information includes one or more of the following:
an identifier of the target DU for uniquely identifying the target DU; or
a candidate cell identifier, or an identifier of a cell group to which the candidate cell belongs. The network side can find the corresponding target DU through the candidate cell identifier or the identifier of the cell group to which the candidate cell belongs;
a second duration (predicted by the UE) indicating that the UE will perform a cell switch after the second duration has elapsed;
notification target DU indication, the source DU notifies the target DU to perform switching after receiving the notification target DU indication; or
beam indication information for informing the source DU of the beam to be used by the UE to transmit the uplink message and/or the transmission/reception beam recommended for the target DU to adopt.

Exemplarily, if there is only one candidate target DU (abbreviated as a candidate DU), the third information does not need to include the identifier of the target DU, and the source DU can directly determine the target DU.

Exemplarily, if the third information includes the identifier of the target DU, the source DU notifies the corresponding target DU to immediately start sending a dynamic grant through the PDCCH or detecting whether there is uplink data in the preconfigured configured grant.

Exemplarily, if the third information includes the identifier of the target DU and the second duration, the source DU notifies the corresponding target DU to start, after the second duration expires, sending the dynamic grant through the PDCCH or detecting whether there is uplink data in the preconfigured configuration grant.

Exemplarily, if the third information includes the identifier of the target DU and the indication to inform the target DU, the source DU notifies the corresponding target DU to immediately start sending the dynamic grant through the PDCCH or detecting whether there is uplink data in the pre-configured configuration grant.

Exemplarily, the first condition includes:
the UE reaches a handover trigger condition at the current time (the handover trigger condition is pre-configured by the network and is not specifically limited here);
the UE will reach the handover trigger condition or perform the handover in the first time window after the current time;
the probability that the UE reaches the handover trigger condition or occurs handover within a first time window after the current time is higher than a preset threshold;
if the prediction result changes, the original third information needs to be updated.

In the present embodiment, the UE does not need to perform frequent L1 measurement reporting, thus reducing air interface occupancy and UE energy consumption. The source DU does not need to perform operation 6 in FIG. 2, and the switching delay is shortened. The target DU can know the occurrence of the handover in advance. At the same time, the source DU can notify other candidate DUs that are not the target DU in advance to release the reserved access resources, thus reducing the occupation of network resources.

### The third embodiment: L1 measurement report relaxation

In the first embodiment, the reporting period is consistent with the current L1 measurement. Compared with the current L1 reporting, where the measurement value at the current moment is reported each time, the first information reported in the first embodiment may include L1 measurement prediction values at multiple time points, which will occupy a larger amount of air interface resources, and most of the reports are actually redundant. Thus, signaling can be reduced by relaxing the reporting without sacrificing access performance. For the L1 measurement reporting scheme in the related art, by predicting and reporting the L1 measurement value in the future period, the L1 measurements in the prediction period can be reduced, thereby reducing the energy consumption of the UE (that is, the amount of uplink transmission data of the UE remains unchanged, but the actual number of measurements is reduced).

In the present embodiment, the network may send the first configuration to the UE, and the UE performs L1 measurement relaxation reporting based on the first configuration.

Exemplarily, the first configuration includes one or more of:
an identifier of the target DU for uniquely identifying the target DU.
a identifier of the candidate cell, or an identifier of a cell group to which the candidate cell belongs.
a second time window, that is, a prediction time window, the UE predicts the L1 measurement prediction values within the second time window after the current time.
the number of prediction time points, the UE predicts the L1 measurement prediction values for the given number of prediction time points after the current time point.
a relaxation reporting indication for explicitly indicating whether the UE supports relaxation reporting.

As an implementation, the first configuration includes an identifier of the target DU and a second time window, and the UE predicts L1 measurement prediction values of a cell designated by the identifier of the target DU within the second time window. The first configuration may include identifiers of multiple groups of corresponding target DUs and second time windows, and the second time window values corresponding to each target DU may be the same or different.

As an implementation, the first configuration includes the identifier of the target DU and the number of prediction time points, and the UE predicts the L1 measurement prediction value of the cell specified by the identifier of the target DU for a given number of prediction time points after the current time. The first configuration may include identifiers of multiple groups of corresponding target DUs and the number of prediction time points.

As an implementation, all configurations are applied by default to all candidate DUs in the case where the identifier of the target DU is defaulted.

As an implementation, the first configuration includes an identifier of the target DU, a second time window, and a relaxation reporting indication, and the UE predicts an L1 measurement prediction value of a cell designated by the identifier of the target DU within the second time window. The relaxation reporting indication may be represented by 1 bit, 1 indicates that relaxation reporting is performed, and 0 indicates that relaxation reporting is not performed. If the relaxed reporting indication has a value of 1, the UE does not report the L1 measurement or the L1 measurement prediction values in the second time window after completing the reporting at the current time. If the relaxation reporting instruction has a value of 0, the UE still performs periodic reporting according to a given measurement period.

As an implementation, the first configuration includes the identifier of the target DU and the second time window, but does not include the relaxation reporting indication. That is, when the relaxation reporting indication is default, the relaxation report is not performed by default.

In the present embodiment, the UE does not need to perform L1 measurement reporting or L1 measurement prediction reporting in the second time window or the prediction time points, thereby reducing air interface transmission signaling without sacrificing access performance.

### The fourth embodiment: UE Capability Reporting

In the first, second and third embodiments, the network needs to know whether the UE supports prediction, to determine whether the corresponding network configuration is performed. Therefore, the UE needs to perform capability reporting before performing fast/relaxed RACH-less LTM.

In the present embodiment, before the network issues the first configuration and/or the UE reports the first information/third information, the UE performs capability reporting. After receiving it, the network issues a first indication to feedback whether the corresponding prediction is allowed.

The capability reporting includes one or more of the following:
whether the UE supports the prediction function;
whether the UE supports prediction of L1 measurement prediction values;
whether the UE supports target DU prediction;
whether the UE supports prediction of the candidate cell identifier or prediction of the cell group to which the candidate cell belongs.
whether the UE supports the second duration prediction; or
whether the UE supports prediction of notification target DU indication;

The first indication indicates whether the corresponding prediction capability reported by the UE is allowed to be performed, and each capability may be represented by 1 bit, where 1 indicates that the UE is supported to perform prediction, and 0 indicates that prediction is not supported.

The embodiment of the present application proposes a fast RACH-less LTM method based on prediction, through which the LTM switching delay can be reduced, the amount of air interface transmission signaling can be reduced, and the candidate cell resource reservation can be reduced.

Further, the current LTM only considers the intra-DU and intra-CU inter-DU scenarios, and the embodiment of the present application can be applied to the Inter-CU scenario in which the LTM may be extended in the future. Accordingly, in the embodiment of the present application, the network-side information transmission path may be changed from source DU-> CU-> target DU to source DU-> source CU-> target CU-> target DU.

FIG. 8 is a schematic block diagram of a first communication device 800 according to an embodiment of the present application. The first communication device 800 may include a sending unit 801.

The sending unit 801 is configured to send first information including first prediction information related to handover.

In an implementation, the first prediction information may be obtained by prediction based on actual measurement information of the first communication device.

In an implementation, the first prediction information includes measurement prediction information, which includes prediction information of one or more measurement time points after the current time.

In an implementation, the measurement prediction information is Layer 1 measurement prediction information, and the duration of two adjacent measurement time points of multiple measurement time points is less than or equal to the measurement period of the Layer 1 measurement.

In an implementation, the first information further includes candidate cell information.

In an implementation, the first communication device further includes a receiving unit 802.

The receiving unit 802 is configured to receive second information including second prediction information related to handover determined by the second communication device based on the first prediction information.

In an implementation, the second prediction information includes at least one of:
a cell handover command for instructing the first communication device to perform cell handover; or
a first duration for instructing the first communication device to perform cell handover according to the first duration.

In an implementation, the receiving unit 802 is further configured to receive a second information update indication for updating the second information.

In an implementation, the second information update indication includes at least one of the following:
an updated cell handover command for replacing the cell handover command in the second information;
an updated first duration for replacing the first duration in the second information; or
a cell handover cancel command for instructing the first communication device to cancel cell handover.

In an implementation, the first prediction information includes at least one of:
target cell information for identifying a cell to which the first communication device needs to handover;
candidate cell information for identifying a cell to which the first communication device may handover;
a second duration for informing the second communication device that the first communication device will perform cell handover according to the second duration;
a notification target cell instruction for instructing the second communication device to notify the target cell to perform cell handover preparation; or
a beam indication for informing the second communication device of a beam to be used for transmitting the uplink message and/or a beam recommended for the target cell to adopt.

In an implementation, the sending unit 801 is configured to send the first information under a first condition related to a handover trigger condition and/or a prediction result of the first communication device.

In an implementation, the first condition includes at least one of:
the first communication device reaches the handover trigger condition at the current time;
the first communication device reaches the handover trigger condition within a first time window after the current time;
a probability that the first communication device reaches the handover trigger condition in a first time window after the current time is higher than a preset threshold; or
the first communication device needs to update the first information according to the prediction result.

In an implementation, the receiving unit 802 is further configured to receive configuration information for instructing the first communication device to perform L1 measurement relaxation.

In an implementation, the configuration information includes at least one of the following:
target cell information for identifying a cell to which the first communication device needs to handover;
candidate cell information for identifying a cell to which the first communication device may handover;
a second time window for instructing the first communication device to predict L1 measurement prediction values within the second time window after the current time;
a number of prediction time points for instructing the first communication device to predict L1 measurement prediction values based on the number of prediction time points after the current time point; or
a relaxation reporting indication for instructing the first communication device to perform relaxation measurement reporting.

In an implementation, the sending unit 801 is further configured to send capability information of the first communication device for indicating the prediction capability of the first communication device.

In an implementation, the capability information includes at least one of:
whether the first communication device supports a prediction function;
whether the first communication device supports prediction of L1 measurement prediction values;
whether the first communication device supports target cell prediction;
whether the first communication device supports candidate cell prediction;
whether the first communication device supports prediction of a cell group to which a candidate cell belongs;
whether the first communication device supports second duration prediction; or
whether the first communication device supports prediction of notification target cell indication.

In an implementation, the receiving unit 802 is further configured to receive a first indication indicating whether the first communication device is allowed to perform the prediction capability reported by the first communication device.

The first communication device 800 according to the embodiment of the present application can realize the corresponding functions of the first communication device in the method embodiment described above. The corresponding flows, functions, implementations and beneficial effects of each module (sub-module, unit or component, etc.) in the first communication device 800 can be referred to the corresponding description in the above method embodiment, and will not be described again here. Note that the functions described for each module (sub-module, unit or component, etc.) in the first communication device 800 of the application embodiment may be realized by different modules (sub-module, unit or component, etc.), or may be realized by the same module (sub-module, unit or component, etc.).

FIG. 9 is a schematic block diagram of a second communication device 900 according to an embodiment of the present application. The second communication device 900 may include a receiving unit 901.

The receiving unit 901 is configured to receive first information including first prediction information related to handover.

In an implementation, the first prediction information may be obtained by prediction based on actual measurement information of the first communication device.

In an implementation, the first prediction information includes measurement prediction information, which includes prediction information of one or more measurement time points after the current time.

In an implementation, the measurement prediction information is Layer 1 measurement prediction information, and the duration of two adjacent measurement time points of the multiple measurement time points is less than or equal to the measurement period of the Layer 1 measurement.

In an implementation, the first information further includes candidate cell information.

In an implementation, the second communication device further includes a sending unit 902.

The sending unit 902 is configured to send second information including second prediction information related to handover determined by the second communication device based on the first prediction information.

In an implementation, the second prediction information includes at least one of:
a cell handover command for instructing the first communication device to perform cell handover; or
a first duration for instructing the first communication device to perform cell handover according to the first duration.

In an implementation, the sending unit 902 is further configured to send a second information update indication for updating the second information.

In an implementation, the second information update indication includes at least one of the following:
an updated cell handover command for replacing the cell handover command in the second information;
an updated first duration for replacing the first duration in the second information; or
a cell handover cancel command for instructing the first communication device to cancel cell handover.

In an implementation, the first prediction information includes at least one of:
target cell information for identifying a cell to which the first communication device needs to handover;
candidate cell information for identifying a cell to which the first communication device may handover;
a second duration for informing the second communication device that the first communication device will perform cell handover according to the second duration;
a notification target cell instruction for instructing the second communication device to notify the target cell to perform cell handover preparation; or
a beam indication for informing the second communication device of a beam to be used for transmitting the uplink message and/or a beam recommended for the target cell to adopt.

In an implementation, the sending unit 902 is further configured for the second communication device to send notification information to the target cell corresponding to the target cell information after receiving the first information, and the notification information notifies the target cell to start immediately, or start after the second duration expires: sending dynamic grant via the PDCCH or detecting whether there is uplink data in the pre-configured configuration authorization.

Alternatively, after receiving the first information, the second communication device sends notification information to the candidate cell corresponding to the candidate cell information, and the notification information notifies the candidate cell to start immediately, or start after the second duration expires: sending dynamic grant through the PDCCH or detecting whether there is uplink data in the pre-configured configuration grant.

In an implementation, the sending unit 902 is further configured to send configuration information for instructing the first communication device to perform L1 measurement relaxation.

In an implementation, the configuration information includes at least one of the following:
target cell information for identifying a cell to which the first communication device needs to handover;
candidate cell information for identifying a cell to which the first communication device may handover;
a second time window for instructing the first communication device to predict L1 measurement prediction values within the second time window after the current time;
a number of prediction time points for instructing the first communication device to predict L1 measurement prediction values based on the number of prediction time points after the current time point; or
a relaxation reporting indication for instructing the first communication device to perform relaxation measurement reporting.

In an implementation, the receiving unit 901 is further configured to receive capability information from the first communication device for indicating the prediction capability of the first communication device.

In an implementation, the capability information includes at least one of:
whether the first communication device supports a prediction function;
whether the first communication device supports prediction of L1 measurement prediction values;
whether the first communication device supports target cell prediction;
whether the first communication device supports candidate cell prediction;
whether the first communication device supports prediction of a cell group to which a candidate cell belongs;
whether the first communication device supports second duration prediction; or
whether the first communication device supports prediction of notification target cell indication.

In an implementation, the sending unit 901 is further configured to send a first indication for indicating whether or not the first communication device is allowed to perform the prediction capability reported by the first communication device.

The second communication device 900 according to the embodiment of the present application can realize the corresponding functions of the second communication device in the method embodiment described above. The corresponding flows, functions, implementations and beneficial effects of each module (sub-module, unit or component, etc.) in the second communication device 900 can be referred to the corresponding description in the above method embodiment, and will not be described again here. Note that the functions described for each module (sub-module, unit or component, etc.) in the second communication device 900 of the application embodiment may be realized by different modules (sub-module, unit or component, etc.), or may be realized by the same module (sub-module, unit or component, etc.).

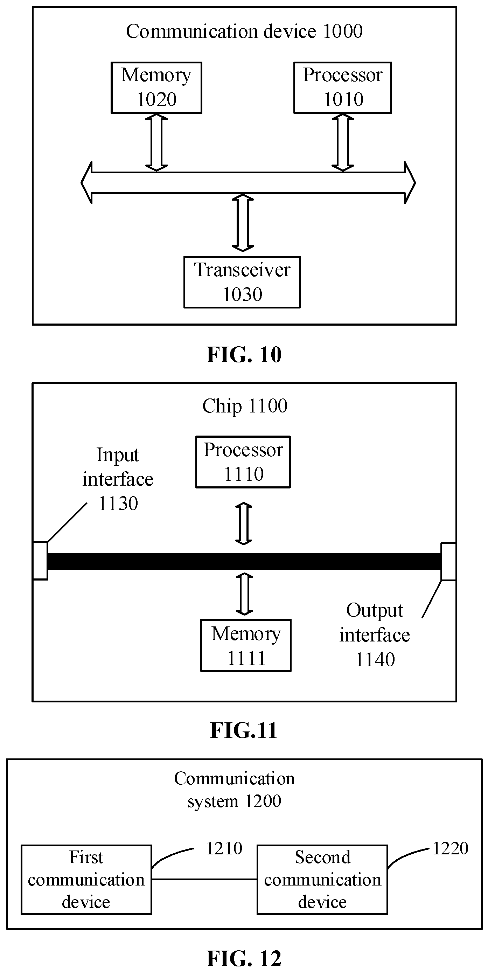

FIG. 10 is a schematic structural diagram of a communication device 1000 according to an embodiment of the present application. The communication device 1000 includes a processor 1010 that can invoke and execute a computer program from a memory to cause the communication device 1000 to implement the method in the embodiment of the present application.

In an implementation, the communication device 1000 may further include a memory 1020. The processor 1010 may invoke and execute a computer program from the memory 1020 to cause the communication device 1000 to implement the method in the embodiment of the present application.

The memory 1020 may be a separate device independent of the processor 1010, or may be integrated in the processor 1010.

In an implementation, the communication device 1000 may further include a transceiver 1030, and the processor 1010 may control the transceiver 1030 to communicate with other devices. Specifically, the transceiver may send information or data to other devices, or receive information or data from other devices.

The transceiver 1030 may include a transmitter and a receiver. The transceiver 1030 may further include an antenna, and the number of antennas may be one or more.

In an implementation, the communication device 1000 may be the first communication device according to the embodiment of the present application, and the communication device 1000 may realize the corresponding processes implemented by the first communication device in each method of the embodiments of the present application, which will not be described again here for simplicity.

In an implementation, the communication device 1000 may be a second communication device according to the embodiment of the present application, and the communication device 1000 may implement corresponding processes implemented by the second communication device in each method of the embodiments of the present application, which will not be described again here for simplicity.

FIG. 11 is a schematic structural diagram of a chip 1100 according to an embodiment of the present application. The chip 1100 includes a processor 1110 that can invoke and execute a computer program from a memory to implement the method in an embodiment of the present application.

In an implementation, the chip 1100 may further include a memory 1120. The processor 1110 may invoke and execute a computer program from the memory 1120 to implement the method executed by the first communication device or the second communication device in the embodiments of the present application.

The memory 1120 may be a separate device independent of the processor 1110, or may be integrated in the processor 1110.

In an implementation, the chip 1100 may further include an input interface 1130. The processor 1110 may control the input interface 1130 to communicate with other devices or chips, and specifically, the input interface may acquire information or data sent by other devices or chips.

In an implementation, the chip 1100 may further include an output interface 1140. The processor 1110 may control the output interface 1140 to communicate with other devices or chips, and specifically, the output interface may output information or data to other devices or chips.

In an implementation, the chip may be applied to the first communication device in the embodiment of the present application, and the chip may realize the corresponding processes implemented by the first communication device in each method of the embodiments of the present application, which will not be described again here for simplicity.

In an implementation, the chip may be applied to the second communication device in the embodiment of the present application, and the chip may realize the corresponding processes implemented by the second communication device in each method of the embodiments of the present application, which will not be described again here for simplicity.

The chips applied to the first communication device and the second communication device may be the same chip or different chips.

It should be understood that the chip mentioned in the embodiment of the present application may also be referred to as a system-level chip, a system chip, a chip system, a system-on-chip (SoC), or the like.

The processors mentioned above may be general purpose processors, digital signal processors (DSP), field programmable gate arrays (FPGAs), application specific integrated circuits (ASICs) or other programmable logic devices, transistor logic devices, discrete hardware components, and the like. The general-purpose processor mentioned above may be a microprocessor, any conventional processor, or the like.

The memory mentioned above may be a volatile memory or a non-volatile memory, or may include both volatile and non-volatile memories. The non-volatile memory may be a read-only memory (ROM), a programmable read-only memory (PROM), an erasable programmable read-only memory (EPROM), an electrically erasable programmable read-only memory (EPROM), or a flash memory. The volatile memory may be a random access memory (RAM).

It should be understood that the above-described memory is exemplary but not limiting, and for example, the memory in the embodiment of the present application may also be a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), a direct memory bus random access memory (Direct Rambus RAM, DR RAM), and the like. That is, the memory in embodiments of the present application is intended to include, but is not limited to, these and any other suitable types of memory.

FIG. 12 is a schematic block diagram of a communication system 1200 according to an embodiment of the present application. The communication system 1200 includes a first communication device 1210 and a first communication device 1220.

The first communication device 1210 is configured to send first information including first prediction information related to handover, and the first prediction information may be information predicted based on actual measurement information of the first communication device.

The second communication device 1220 is configured to receive the first information.

The first communication device 1210 may be used to implement the corresponding functions implemented by the first communication device in the above-described method, and the second communication device 1220 may be used to implement the corresponding functions implemented by the second communication device in the above-described method. For the sake of brevity, details will not be described here.

In the above-described embodiments, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, a flow or function according to an embodiment of the present application is generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium. For example, the computer instructions may be transmitted from one website site, computer, server, or data center to another website site, computer, server, or data center via wired (e.g., coaxial cable, fiber optic, Digital Subscriber Line (DSL)) or wireless (e.g., infrared, wireless, microwave, etc.). The computer-readable storage medium may be any available medium accessible by a computer or a data storage device such as a server, data center, etc., incorporating one or more of the available media integrations. The available medium may be a magnetic medium (e.g., a floppy Disk, a hard Disk, a magnetic tape), an optical medium (e.g., a DVD), or a semiconductor medium (e.g., a Solid State Disk (SSD)), or the like.

It should be understood that in various embodiments of the present application, the sequence numbers of the above-described processes does not imply the particular execution order. The execution order of the processes should be determined by their functions and inherent logic, and shall not constitute any limitation on the implementation of the embodiments of the present application.

Those skilled in the art can clearly understand that for convenience and simplicity of the description, the specific working processes of the above-described systems, devices, and units can be referred to the corresponding processes in the above-described method embodiments, and will not be described again here.

The above is only the specific implementations of the application and not intended to limit the scope of protection of the application. Any variations or replacements apparent to those skilled in the art within the technical scope disclosed by the application shall fall within the scope of protection of the application. Therefore, the scope of protection of the application shall be subject to the scope of protection of the claims.

## Claims

1. A communication method, comprising:
sending, by a first communication device, first information, wherein the first information includes first prediction information related to handover, and the first prediction information is obtained by prediction based on actual measurement information of the first communication device.

2. The method of claim 1, wherein the first prediction information comprises measurement prediction information, and the measurement prediction information comprises prediction information of one or more measurement time points after a current time.

3. The method of claim 2, wherein the measurement prediction information is Layer 1 (L1) measurement prediction information, and a duration between two adjacent measurement time points among a plurality of measurement time points is less than or equal to a measurement period of Layer 1 measurement.

4. The method of any one of claims 1 to 3, wherein the first information further includes candidate cell information.

5. The method of any one of claims 1 to 4, further comprising:
receiving, by the first communication device, second information, wherein the second information comprises second prediction information related to handover, the second prediction information is determined by a second communication device based on the first prediction information.

6. The method of claim 5, wherein the second prediction information includes at least one of the following:
a cell handover command for instructing the first communication device to perform cell handover; or
a first duration for instructing the first communication device to perform cell handover according to the first duration.

7. The method of claim 5 or 6, further comprising:
receiving, by the first communication device, a second information update indication for updating the second information.

8. The method of claim 7, wherein the second information update indication comprises at least one of the following:
an updated cell handover command for replacing the cell handover command in the second information;
an updated first duration for replacing the first duration in the second information; or
a cell handover cancel command for instructing the first communication device to cancel cell handover.

9. The method of claim 1, wherein the first prediction information comprises at least one of the following:
target cell information for identifying a cell to which the first communication device needs to handover;
candidate cell information for identifying a cell to which the first communication device may handover;
a second duration for informing the second communication device that the first communication device will perform cell handover according to the second duration;
a notification target cell indication for instructing the second communication device to notify a target cell to perform cell handover preparation; or
a beam indication for informing the second communication device of a beam to be used for transmitting uplink messages and/or a beam recommended for a target cell to adopt.

10. The method of claim 9, wherein sending, by the first communication device, the first information comprises:
sending, by the first communication device, the first information under a first condition, wherein the first condition is related to a handover trigger condition and/or a prediction result of the first communication device.

11. The method of claim 10, wherein the first condition includes at least one of the following:
the first communication device reaches the handover trigger condition at a current time;
the first communication device reaches the handover trigger condition within a first time window after a current time;
a probability that the first communication device reaches the handover trigger condition within a first time window after a current time is higher than a preset threshold; or
the first communication device needs to update the first information based on the prediction result.

12. The method of any one of claims 1 to 11, further comprising:
receiving, by the first communication device, configuration information, wherein the configuration information instructs the first communication device to perform L1 measurement relaxation.

13. The method of claim 12, wherein the configuration information comprises at least one of the following:
target cell information for identifying a cell to which the first communication device needs to handover;
candidate cell information for identifying a cell to which the first communication device may handover;
a second time window for instructing the first communication device to predict L1 measurement prediction values within the second time window after a current time;
a number of prediction time points for instructing the first communication device to predict L1 measurement prediction values based on the number of prediction time points after the current time; or
a relaxation reporting indication for instructing the first communication device to perform relaxation measurement reporting.

14. The method of any one of claims 1 to 13, further comprising:
sending, by the first communication device, its own capability information, wherein the capability information indicates a prediction capability of the first communication device.

15. The method of claim 14, wherein the capability information includes at least one of the following:
whether the first communication device supports a prediction function;
whether the first communication device supports prediction of L1 measurement prediction values;
whether the first communication device supports target cell prediction;
whether the first communication device supports candidate cell prediction;
whether the first communication device supports prediction of a cell group to which a candidate cell belongs;
whether the first communication device supports second duration prediction; or
whether the first communication device supports prediction of notification target cell indication.

16. The method of claim 14 or 15, further comprising:
receiving, the first communication device, a first indication, wherein the first indication indicates whether the first communication device is allowed to perform the prediction capability reported by the first communication device.

17. A communication method, comprising:
receiving, by a second communication device, first information, wherein the first information includes first prediction information related to handover, and the first prediction information is obtained by prediction based on actual measurement information of a first communication device.

18. The method of claim 17, wherein the first prediction information includes measurement prediction information, and the measurement prediction information comprises prediction information of one or more measurement time points after a current time.

19. The method of claim 18, wherein the measurement prediction information is Layer 1 (L1) measurement prediction information, and a duration between two adjacent measurement time points among a plurality of measurement time points is less than or equal to a measurement period of Layer 1 measurement.

20. The method of any one of claims 17 to 19, wherein the first information further comprises candidate cell information.

21. The method of any one of claims 17 to 20, further comprising:
sending, by the second communication device, second information, wherein the second information comprises second prediction information related to handover, and the second prediction information is determined by the second communication device based on the first prediction information.

22. The method of claim 21, wherein the second prediction information includes at least one of the following:
a cell handover command for instructing the first communication device to perform cell handover; or
a first duration for instructing the first communication device to perform cell handover according to the first duration.

23. The method of claim 21 or 22, further comprising:
sending, by the second communication device, a second information update indication for updating the second information.

24. The method of claim 23, wherein the second information update indication includes at least one of the following:
an updated cell handover command for replacing the cell handover command in the second information;
an updated first duration for replacing the first duration in the second information; or
a cell handover cancel command for instructing the first communication device to cancel cell handover.

25. The method of claim 17, wherein the first prediction information includes at least one of the following:
target cell information for identifying a cell to which the first communication device needs to handover;
candidate cell information for identifying a cell to which the first communication device may handover;
a second duration for informing the second communication device that the first communication device will perform cell handover according to the second duration;
a notification target cell indication for instructing the second communication device to notify a target cell to perform cell handover preparation; or
a beam indication for informing the second communication device of a beam to be used for transmitting uplink messages and/or a beam recommended for a target cell to adopt.

26. The method of claim 25, further comprising:
sending, by the second communication device, notification information to a target cell corresponding to the target cell information after receiving the first information, wherein the notification information notifies the target cell to start immediately, or start after the second duration expires: sending a dynamic grant via a PDCCH or detecting whether there is uplink data within a preconfigured configured grant; or
sending, by the second communication device, notification information to a candidate cell corresponding to the candidate cell information after receiving the first information, wherein the notification information notifies the candidate cell to start immediately, or start after the second duration expires: sending a dynamic grant via a PDCCH or detecting whether there is uplink data within a preconfigured configured grant.

27. The method of any one of claims 17 to 26, further comprising:
sending, by the second communication device, configuration information, wherein the configuration information instructs the first communication device to perform L1 measurement relaxation.

28. The method of claim 27, wherein the configuration information comprises at least one of the following:
target cell information for identifying a cell to which the first communication device needs to handover;
candidate cell information for identifying a cell to which the first communication device may handover;
a second time window for instructing the first communication device to predict L1 measurement prediction values within the second time window after a current time;
a number of prediction time points for instructing the first communication device to predict L1 measurement prediction values based on the number of prediction time points after a current time; or
a relaxation reporting indication for instructing the first communication device to perform relaxation measurement reporting.

29. The method of any one of claims 17 to 28, further comprising:
receiving, by the second communication device, capability information from the first communication device, wherein the capability information indicates a prediction capability of the first communication device.

30. The method of claim 29, wherein the capability information includes at least one of the following:
whether the first communication device supports a prediction function;
whether the first communication device supports predicting L1 measurement prediction values;
whether the first communication device supports target cell prediction;
whether the first communication device supports candidate cell prediction;
whether the first communication device supports cell group prediction to which a candidate cell belongs;
whether the first communication device supports second duration prediction; or
whether the first communication device supports notification target cell indication prediction.

31. The method of claim 29 or 30, further comprising:
sending, by the second communication device, a first indication, wherein the first indication indicates whether the first communication device is allowed to perform the prediction capability reported by the first communication device.

32. A first communication device, comprising:
a sending unit, configured to send first information, wherein the first information includes first prediction information related to handover, and the first prediction information is obtained by prediction based on actual measurement information of the first communication device.

33. The first communication device of claim 32, wherein the first prediction information comprises measurement prediction information, and the measurement prediction information comprises prediction information of one or more measurement time points after a current time.

34. The first communication device of claim 33, wherein the measurement prediction information is Layer 1 (L1) measurement prediction information, and a duration between two adjacent measurement time points among a plurality of measurement time points is less than or equal to a measurement period of Layer 1 measurement.

35. The first communication device of any one of claims 32 to 34, wherein the first information further includes candidate cell information.

36. The first communication device of any one of claims 32 to 35, wherein the first communication device further comprises:
a receiving unit, configured to receive second information, wherein the second information comprises second prediction information related to handover, the second prediction information is determined by a second communication device based on the first prediction information.

37. The first communication device of claim 36, wherein the second prediction information includes at least one of the following:
a cell handover command for instructing the first communication device to perform cell handover; or
a first duration for instructing the first communication device to perform cell handover according to the first duration.

38. The first communication device of claim 36 or 37, wherein the receiving unit is further configured to receive a second information update indication for updating the second information.

39. The first communication device of claim 38, wherein the second information update indication comprises at least one of the following:
an updated cell handover command for replacing the cell handover command in the second information;
an updated first duration for replacing the first duration in the second information; or
a cell handover cancel command for instructing the first communication device to cancel cell handover.

40. The first communication device of claim 32, wherein the first prediction information comprises at least one of the following:
target cell information for identifying a cell to which the first communication device needs to handover;
candidate cell information for identifying a cell to which the first communication device may handover;
a second duration for informing the second communication device that the first communication device will perform cell handover according to the second duration;
a notification target cell indication for instructing the second communication device to notify a target cell to perform cell handover preparation; or
a beam indication for informing the second communication device of a beam to be used for transmitting uplink messages and/or a beam recommended for a target cell to adopt.

41. The first communication device of claim 40, wherein the sending unit is configured to send the first information under a first condition, wherein the first condition is related to a handover trigger condition and/or a prediction result of the first communication device.

42. The first communication device of claim 41, wherein the first condition includes at least one of the following:
the first communication device reaches the handover trigger condition at a current time;
the first communication device reaches the handover trigger condition within a first time window after a current time;
a probability that the first communication device reaches the handover trigger condition within a first time window after a current time is higher than a preset threshold; or
the first communication device needs to update the first information based on the prediction result.

43. The first communication device of any one of claims 32 to 42, wherein the receiving unit is further configured to receive configuration information, wherein the configuration information instructs the first communication device to perform L1 measurement relaxation.

44. The first communication device of claim 43, wherein the configuration information comprises at least one of the following:
target cell information for identifying a cell to which the first communication device needs to handover;
candidate cell information for identifying a cell to which the first communication device may handover;
a second time window for instructing the first communication device to predict L1 measurement prediction values within the second time window after a current time;
a number of prediction time points for instructing the first communication device to predict L1 measurement prediction values based on the number of prediction time points after the current time; or
a relaxation reporting indication for instructing the first communication device to perform relaxation measurement reporting.

45. The first communication device of any one of claims 32 to 44, wherein the sending unit is further configured to send capability information of the first communication device, wherein the capability information indicates a prediction capability of the first communication device.

46. The first communication device of claim 45, wherein the capability information includes at least one of the following:
whether the first communication device supports a prediction function;
whether the first communication device supports prediction of L1 measurement prediction values;
whether the first communication device supports target cell prediction;
whether the first communication device supports candidate cell prediction;
whether the first communication device supports prediction of a cell group to which a candidate cell belongs;
whether the first communication device supports second duration prediction; or
whether the first communication device supports prediction of notification target cell indication.

47. The first communication device of claim 45 or 46, wherein the receiving unit is further configured to receive a first indication, wherein the first indication indicates whether the first communication device is allowed to perform the prediction capability reported by the first communication device.

48. A second communication device, comprising:
a receiving unit, configured to receive first information, wherein the first information includes first prediction information related to handover, and the first prediction information is obtained by prediction based on actual measurement information of a first communication device.

49. The second communication device of claim 48, wherein the first prediction information includes measurement prediction information, and the measurement prediction information comprises prediction information of one or more measurement time points after a current time.

50. The second communication device of claim 49, wherein the measurement prediction information is Layer 1 (L1) measurement prediction information, and a duration between two adjacent measurement time points among a plurality of measurement time points is less than or equal to a measurement period of Layer 1 measurement.

51. The second communication device of any one of claims 48 to 50, wherein the first information further comprises candidate cell information.

52. The second communication device of any one of claims 48 to 51, wherein the second communication device further comprises:
a sending unit, configured to send second information, wherein the second information comprises second prediction information related to handover, and the second prediction information is determined by the second communication device based on the first prediction information.

53. The second communication device of claim 52, wherein the second prediction information includes at least one of the following:
a cell handover command for instructing the first communication device to perform cell handover; or
a first duration for instructing the first communication device to perform cell handover according to the first duration.

54. The second communication device of claim 52 or 53, wherein the sending unit is further configured to send a second information update indication for updating the second information.

55. The second communication device of claim 54, wherein the second information update indication comprises at least one of the following:
an updated cell handover command for replacing the cell handover command in the second information;
an updated first duration for replacing the first duration in the second information; or
a cell handover cancel command for instructing the first communication device to cancel cell handover.

56. The second communication device of claim 48, wherein the first prediction information includes at least one of the following:
target cell information for identifying a cell to which the first communication device needs to handover;
candidate cell information for identifying a cell to which the first communication device may handover;
a second duration for informing the second communication device that the first communication device will perform cell handover according to the second duration;
a notification target cell indication for instructing the second communication device to notify a target cell to perform cell handover preparation; or
a beam indication for informing the second communication device of a beam to be used for transmitting uplink messages and/or a beam recommended for a target cell to adopt.

57. The second communication device of claim 56, wherein the sending unit is further configured to:
send notification information to a target cell corresponding to the target cell information after the second communication device receives the first information, wherein the notification information notifies the target cell to start immediately, or start after the second duration expires: sending a dynamic grant via a Physical Downlink Control Channel (PDCCH) or detecting whether there is uplink data within a preconfigured configured grant; or
send notification information to a candidate cell corresponding to the candidate cell information after the second communication device receives the first information, wherein the notification information notifies the candidate cell to start immediately, or start after the second duration expires: sending a dynamic grant via a PDCCH or detecting whether there is uplink data within a preconfigured configured grant.

58. The second communication device of any one of claims 48 to 57, wherein the sending unit is further configured to send configuration information, wherein the configuration information instructs the first communication device to perform L1 measurement relaxation.

59. The second communication device of claim 58, wherein the configuration information comprises at least one of the following:
target cell information for identifying a cell to which the first communication device needs to handover;
candidate cell information for identifying a cell to which the first communication device may handover;
a second time window for instructing the first communication device to predict L1 measurement prediction values within the second time window after a current time;
a number of prediction time points for instructing the first communication device to predict L1 measurement prediction values based on the number of prediction time points after a current time; or
a relaxation reporting indication for instructing the first communication device to perform relaxation measurement reporting.

60. The second communication device of any one of claims 17 to 28, wherein the receiving unit is further configured to receive capability information from the first communication device, wherein the capability information indicates a prediction capability of the first communication device.

61. The second communication device of claim 60, wherein the capability information includes at least one of the following:
whether the first communication device supports a prediction function;
whether the first communication device supports predicting L1 measurement prediction values;
whether the first communication device supports target cell prediction;
whether the first communication device supports candidate cell prediction;
whether the first communication device supports cell group prediction to which a candidate cell belongs;
whether the first communication device supports second duration prediction; or
whether the first communication device supports notification target cell indication prediction.

62. The second communication device of claim 60 or 61, wherein the sending unit is further configured to send a first indication, wherein the first indication indicates whether the first communication device is allowed to perform the prediction capability reported by the first communication device.

63. A communication device, comprising: a transceiver, a processor, and a memory for storing a computer program, the transceiver being configured to communicate with other devices, and the processor being configured to invoke and execute the computer program stored in the memory to cause the communication device to perform the method of any one of claims 1 to 31.

64. A chip, comprising a processor configured to invoke and execute a computer program from a memory, to cause a device installed with the chip performs the method of any one of claims 1 to 31.

65. A computer-readable storage medium for storing a computer program, which, when executed by a device, causes the device to perform the method of any one of claims 1 to 31.

66. A computer program product, comprising computer program instructions that cause a computer to perform the method of any one of claims 1 to 31.

67. A computer program, causing a computer to perform the method of any one of claims 1 to 31.

68. A communication system, comprising:
a first communication device, configured to perform the method of any one of claims 1 to 16; and
a second communication device, configured to perform the method of any one of claims 17 to 31.
